**Europäisches Patentamt**

**European Patent Office**

**Office européen des brevets**

(19)

(11) Numéro de publication: **0 040 164**

**A1**

(12) # DEMANDE DE BREVET EUROPEEN

(21) Numéro de dépôt: **81420070.5**

(22) Date de dépôt: **07.05.81**

(51) Int. Cl.³: **H 02 K 9/22**

(30) Priorité: **09.05.80 FR 8011149**

(43) Date de publication de la demande:
**18.11.81 Bulletin 81/46**

(84) Etats contractants désignés:
**CH DE GB IT LI NL SE**

(71) Demandeur: **Mavilor Systemes (société anonyme de droit suisse)**
**Grenette**
**CH-1700 Fribourg(CH)**

(72) Inventeur: **Coquillart, Michel**
**14 rue de Patroa**
**F-42100 Saint-Etienne Terrenoire(FR)**

(74) Mandataire: **Buttet, Roger et al,**
**"Cabinet Charras" 3, Place de l'Hôtel-de-Ville**
**F-42000 Saint-Etienne(FR)**

(54) **Rotor avec dispositif de refroidissement notamment du collecteur pour moteurs électriques, son procédé et ses moyens de réalisation.**

(57) Le refroidissement s'opère par un pont thermique établi entre la douille intérieure conductrice (2) et le collecteur (3), par l'intermédiaire de un ou de moyens conducteurs (1 - C1 - C2), solides ou fluides, noyés ou inclus au moulage, et dont une partie est positionnée à proximité immédiate du collecteur (3) mais sans aucun contact avec lui, tandis que l'autre partie est en contact étroit avec la douille conductrice (2).

EP 0 040 164 A1

./...

Croydon Printing Company Ltd.

FIG.1

– 1 –

<u>Rotor avec dispositif de refroidissement notamment du collecteur pour moteurs électriques, son procédé et ses moyens de
réalisation.</u>

L'invention concerne un rotor avec dispositif de refroidissement notamment du collecteur pour moteurs électriques, son
procédé et ses moyens de réalisation.

L'invention telle qu'elle est caractérisée dans les revendications permet de réaliser le refroidissement du rotor et du
collecteur d'un moteur électrique, par transfert des calories
dégagées par le collecteur vers l'extérieur du moteur, en
passant par la douille conductrice du rotor, cela au moyen
d'un dispositif simple, intégré à la fabrication du rotor.

Suivant une caractéristique, le transfert des calories du
collecteur à la douille du rotor, est obtenu par un pont
thermique établi entre la douille intérieure conductrice et
le collecteur par un ou des moyens conducteurs solides ou
fluides noyés ou inclus au moulage, et dont une partie est
positionnée à proximité immédiate du collecteur mais sans
aucun contact avec lui, l'autre partie étant en contact
étroit avec la douille conductrice.

Ces caractéristiques et d'autres encore ressortiront de la
suite de la description.

Pour fixer l'objet de l'invention, sans toutefois le limiter, aux figures des dessins annexés :

La figure 1 est une vue en coupe illustrant un moteur électrique équipé d'un rotor selon une forme de réalisation.

La figure 2 est une vue en coupe partielle du rotor représenté à la figure 1.

La figure 3 est une vue partielle en perspective, de l'élément de transfert de calories représenté aux figures 1 et 2.

La figure 4 est une vue en coupe partielle d'un rotor avec un élément de transfert de calories selon une autre forme de réalisation.

La figure 5 est une vue partielle en perspective de l'élément de transfert de calories représenté figure 4.

La figure 6 est une vue partielle en coupe, illustrant la première partie du moulage d'un rotor avec un élément de transfert de calories directement formé au moulage.

La figure 7 est une vue partielle en coupe, considérée suivant la ligne 7-7 de la figure 6.

La figure 8 est une vue partielle en coupe, illustrant la deuxième partie du moulage du rotor.

La figure 9 est une vue partielle en coupe, considérée suivant la ligne 9-9 de la figure 8.

La figure 10 est une vue en perspective illustrant une partie de l'élément de transfert de calories représenté figures 8 et 9.

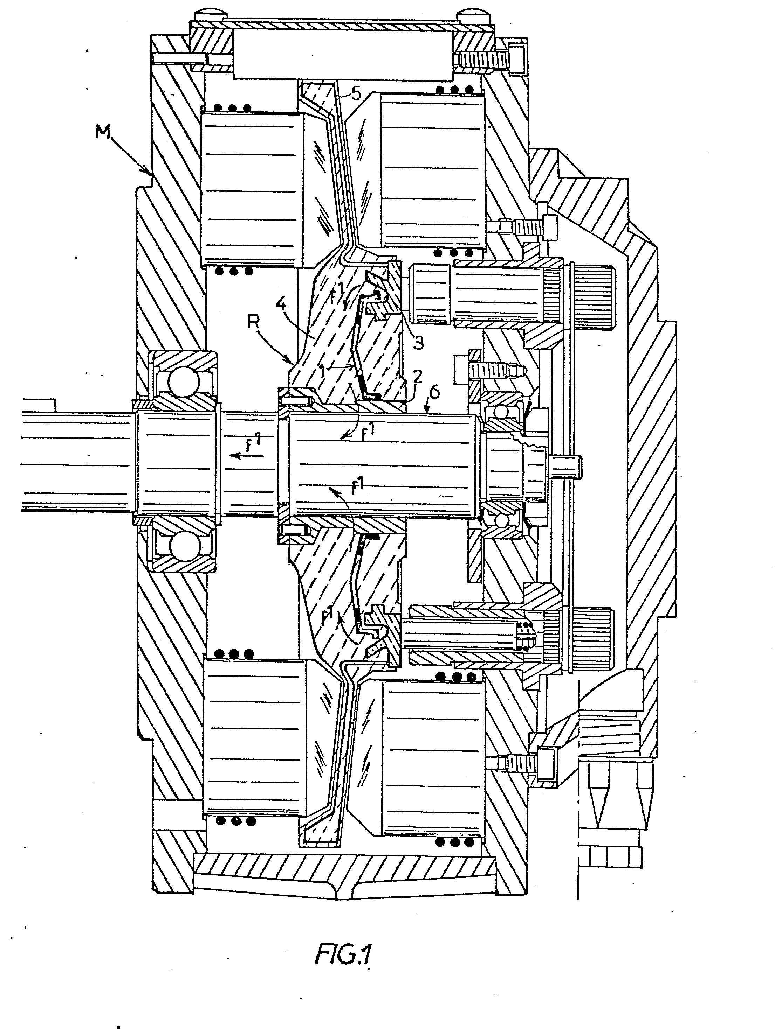

Selon la présente invention et dans l'exemple nullement limitatif illustré aux dessins, on voit, figure 1, un moteur électrique (M) avec un rotor (R) plat, en forme de disque, comprenant un ensemble moulé qui incorpore un collecteur, une douille, des enroulements et un dispositif de refroidissement.

Selon cette réalisation, le pont thermique entre le collecteur et la douille du rotor, est obtenu par une pièce métallique (1) qui comprend une portée intérieure (1a) montée serrée sur une portée de la douille intérieure (2) du rotor, une paroi (1b) sensiblement perpendiculaire à la portée (1a) et une portée extérieure (1c) s'étendant de préférence dans le même sens que la portée (1a) et disposée à proximité immédiate du collecteur (3) mais sans contact avec lui. La pièce (1) est mise en place sur la douille (2) avant moulage de l'ensemble et est noyée dans la matière isolante (4) enrobant à la façon connue, le collecteur (3) et les enroulements ou bobinage (5). L'isolation électrique de la pièce (1) à proximité du collecteur, est obtenue par tous moyens connus tels que fibre de verre ou enduction de revêtement epoxy ou similaire.

Pour éviter la réalisation du moulage en deux parties distinctes et pour assurer une continuité de la résine moulée, la pièce (1) présente dans sa paroi (1b), une pluralité d'orifices (1d) dans lesquels peut passer la résine. De plus, la portée cylindrique extérieure (1c) présente de préférence à son extrémité, un bord relevé (1e) destiné à augmenter la rigidité tout en participant efficacement au renforcement du collecteur.

Selon ces dispositions, l'on conçoit que les calories dégagées par le collecteur (3) sont captées par la pièce métallique (1) pour être transmises par conduction vers la douille (2) du rotor et l'arbre moteur (6) d'où elles sont évacuées vers l'extérieur du moteur, suivant flèche (f1) de la figure 1.

Le transfert des calories par pont thermique peut être sensiblement augmenté en remplaçant la pièce métallique (1) par un élément appelé communément "caloduc", qui comprend un premier volume extérieur placé vers une partie chaude, et un deuxième volume intérieur placé vers une partie froide ou moins chaude. Entre ces deux volumes, des liaisons étanches permettent la circulation d'un fluide gazeux ou liquide pouvant se vaporiser lorsqu'il est dans le volume chaud et se liquéfier lorsqu'il est dans le volume froid ou moins chaud.

Si la construction et le fonctionnement du caloduc sont prévus pour que le fluide en phase liquide, se déplace vers la partie chaude en chassant le fluide en phase gazeuse, vers la partie froide ou moins chaude, on conçoit bien son fonctionnement.

En effet, la phase liquide placée à la partie chaude, va passer en phase gazeuse en absorbant les calories de la partie chaude nécessaires à cette transformation (chaleur de vaporisation). Le fluide étant sous forme gazeuse va être chassé vers la partie froide ou moins chaude où il pourra se condenser en phase liquide, en cédant autant de calories qu'il en a absorbé pour se vaporiser. Le fluide revenu en phase liquide va se déplacer vers la partie chaude et un nouveau cycle peut recommencer.

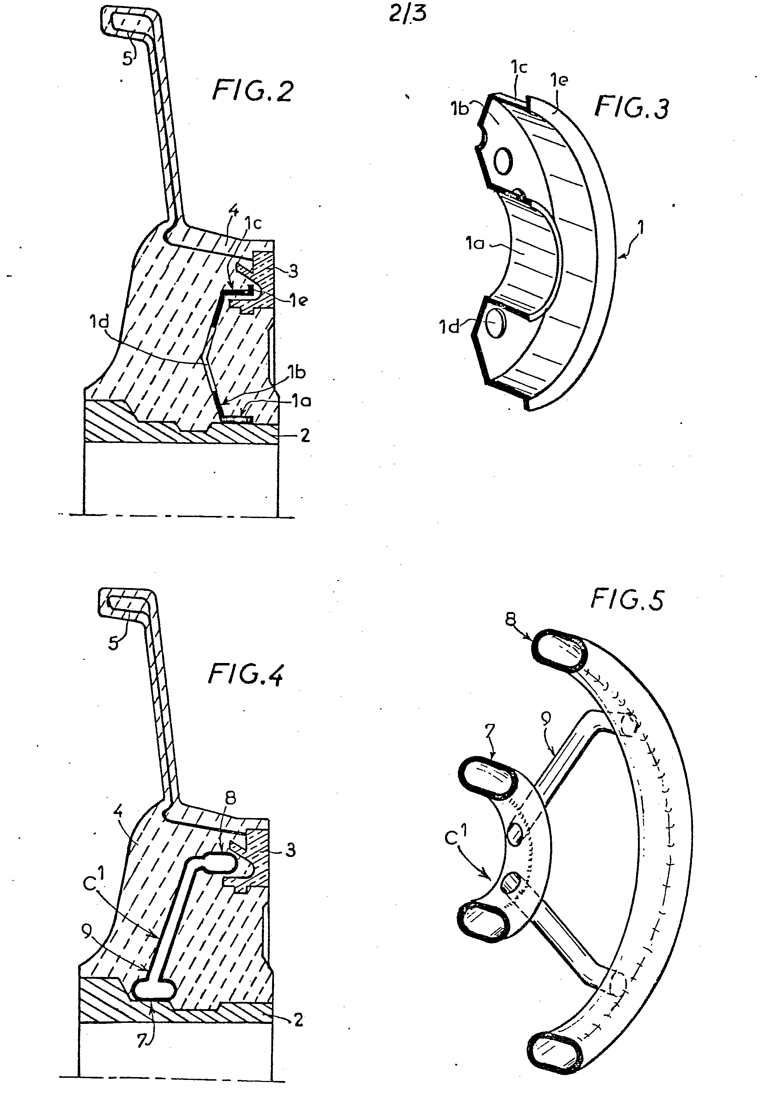

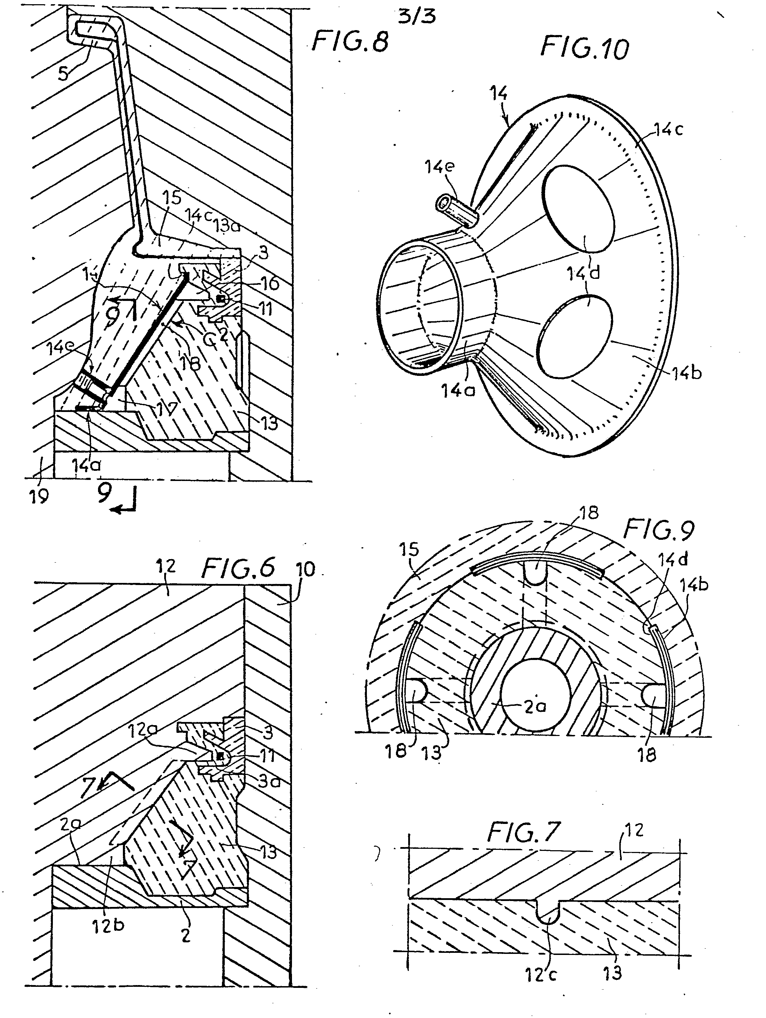

On a illustré aux figures 4 et 5, une forme de réalisation de ce caloduc (C1). Les volumes intérieur et extérieur (7) et (8) sont constitués par des anneaux tubulaires métalliques de section quelconque, et par exemple ovoïde. L'anneau intérieur (7) est en contact étroit avec une des portées de la douille (2) du rotor, tandis que l'anneau extérieur (8) est disposé à proximité immédiate du collecteur (3) mais sans contact avec lui. Des branches tubulaires radiales (9) relient les deux volumes (7) et (8) pour assurer les communications internes, et l'ensemble étanche est noyé dans la résine lors du moulage. On remplit alors partiellement ce circuit avant de le fermer avec un fluide dont la température de vaporisation a été judicieusement choisie en fonction de la température atteinte par le collecteur.

Pour éviter que de l'air soit enfermé au remplissage, on vaporise partiellement le fluide à l'aide d'une source chaude.

Par exemple, si le rotor doit fonctionner entre 30 et 80 degrés centigrades, on remplit le circuit avec un fluide vaporisable à 70/80 degrés centigrades (toluène notamment) ; on porte le circuit à température de 80 degrés centigrades par exemple (température où l'alcool bout), ce qui chasse l'air. Il reste donc seulement du fluide en partie liquide et en partie gazeux, et l'on peut obturer le circuit.

0040164

A noter que si l'on doit fonctionner à d'autres températures, le fluide d'échange thermique devra être adapté en conséquence.

Quand le rotor ainsi équipé est placé dans un moteur et qu'il tourne, la force centrifuge fait déplacer le fluide liquide vers l'anneau extérieur (8), c'est à dire vers le collecteur (3) ou partie chaude, tandis que le fluide gazeux est refoulé vers l'anneau intérieur (7), c'est à dire vers la douille ou partie froide ou moins chaude. Dès que le collecteur atteint la température de vaporisation du fluide, le cycle d'échange thermique s'amorce et les calories sont transférées vers la douille (2) et l'arbre moteur (6), puis vers l'extérieur.

Selon une autre forme de réalisation illustrée aux figures 6, 7, 8, 9 et 10, le caloduc (C2) est réalisé directement dans la résine par moulage du rotor en deux parties.

On voit aux figures 6 et 7 que l'on positionne dans un moule inférieur (10), la douille intérieure (2) du rotor et le collecteur (3), ainsi que s'il y a lieu, un anneau de renforcement (11) dans la gorge (3a) du collecteur. Un moule supérieur (12) est mis en place contre la douille et autour du collecteur. Ce moule présente au niveau de la gorge (3a) du collecteur, une saillie annulaire (12a), à proximité d'une portée (2a) de la douille (2), une autre saillie annulaire (12b), et radialement, des barrettes ou tenons (12c) reliant les saillies (12a - 12b).

La résine de moulage (13) est introduite dans l'espace laissé libre entre le moule inférieur (10), la douille (2), le moule supérieur (12) et le collecteur (3). Lorsque l'on enlève le moule supérieur (12), la résine de ce premier moulage présente en creux, les formes complémentaires aux saillies (12a - 12b) et aux tenons (12c).

Avant de réaliser avec des moules (19 - 20), le deuxième moulage destiné principalement à enrober les enroulements ou bobines (5) reliés au collecteur et à donner la forme définitive du rotor, on met en place contre le premier moulage, une pièce métallique (14) qui comprend à cet effet, une portée (14a) d'emmanchement serré sur la portée (2a) de la douille, suivie d'une portée conique (14b) destinée à recouvrir et obturer les formes en creux complémentaires aux tenons (12c) de la résine, puis une collerette d'extrémité (14c) qui prend appui contre un évidement (13a) de la résine, figure 8. Des orifices (14d) sont exécutés sur la portée conique (14b) afin d'autoriser une bonne liaison de la résine (15) du deuxième moulage avec la résine (13) du premier moulage, ces orifices étant bien entendu, positionnés entre les formes complémentaires aux tenons (12c). Un tube (14e) piqué dans la pièce (14) et débouchant à l'extérieur de la résine (15), est prévu pour opérer le remplissage comme précédemment, du caloduc étanche ainsi constitué par la gorge extérieure (16), complémentaire à la saillie (12a) du moule supérieur (12), la gorge intérieure (17), complémentaire à la saillie (12b) du moule supérieur (12), et par les canaux (18), complémentaires aux tenons (12c) du moule supérieur (12).

Revendications.

1. Rotor avec dispositif de refroidissement notamment du collecteur pour moteurs électriques, son procédé et ses moyens de réalisation, du type comprenant un ensemble moulé incorporant une douille intérieure (2) de calage sur l'arbre moteur (6), un collecteur de courant (3) et des enroulements ou bobinage (5) reliés au collecteur (3), caractérisés en ce que le refroidissement s'opère par un pont thermique établi entre la douille intérieure conductrice (2) et le collecteur (3), par l'intermédiaire d'un ou de moyens conducteurs (1 - C1 - C2), solides ou fluides, noyés ou inclus au moulage, et dont une partie est positionnée à proximité immédiate du collecteur (3) mais sans aucun contact avec lui, tandis que l'autre partie est en contact étroit avec la douille conductrice (2).

2. Rotor selon 1, caractérisé en ce que le pont thermique entre le collecteur (3) et la douille (2), est obtenu par une pièce métallique (1) mise en place avant moulage et qui comprend une portée intérieure (1a) montée en contact étroit avec la douille intérieure (2), une paroi (1b) sensiblement perpendiculaire à la portée (1a), et une portée extérieure (1c) s'étendant à proximité immédiate du collecteur, sans aucun contact avec lui ; des orifices (1d) exécutés sur la paroi (1b) assurant la continuité de moulage.

3. Rotor selon 2, caractérisé en ce que la pièce métallique (1) est isolée électriquement avant moulage, par tous moyens tels que fibre de verre, revêtement epoxy..., au moins à proximité du collecteur (3).

4. Rotor selon 2, caractérisé en ce que la pièce métallique (1) présente à l'extrémité de sa portée extérieure (1c), un bord relevé (1e) destiné à renforcer le collecteur (3) et à rigidifier la pièce (1).

5. Rotor selon 1, caractérisé en ce que le pont thermique entre le collecteur (3) et la douille (2), est obtenu par un organe (C1) appelé communément "caloduc", qui est noyé au moulage et qui comprend un volume intérieur (7) en contact étroit avec la douille (2), un volume extérieur (8) positionné à proximité immédiate du collecteur (3) mais sans contact avec lui, et des branches tubulaires radiales (9) communiquant avec les volumes (7) et (8) ; l'ensemble étant étanche et rempli partiellement, avant fermeture, d'un fluide déterminé en fonction des températures de fonctionnement du rotor pour se vaporiser lorsqu'il est dans le volume chaud (8) et se liquéfier lorsqu'il est dans le volume froid (7) ou moins chaud, la force centrifuge entraînant toujours la partie liquide du fluide vers le collecteur ou volume chaud.

6. Rotor selon 1, caractérisé en ce que le pont thermique entre le collecteur (3) et la douille (2) est obtenu par un caloduc (C2) qui est constitué par des volumes (16 - 17) et des canaux radiaux (18) formés directement par moulage d'une première partie (13) du rotor, et par une pièce métallique (14) de fermeture, avec tube de remplissage (14e) et orifices (14d) de communication de la résine (15) d'un deuxième moulage avec la résine (13) du premier moulage, lesdits orifices (14d) étant positionnés entre les canaux (18).

7. Rotor selon 6, caractérisé en ce que la pièce métallique (14) présente une portée (14a) en contact étroit avec la douille (2), une portée conique (14b) de fermeture des canaux (18) équipée des orifices (14d), et une collerette d'extrémité (14c) d'appui sur un évidement (13a) de la résine (13), à proximité immédiate du collecteur (3) mais sans contact avec lui.

8. Procédé de réalisation du rotor selon 1 et 6, caractérisé en ce que l'on positionne la douille (2) et le collecteur (3) sur un moule inférieur (10), on positionne un moule supérieur (12) contre la douille (2) et autour du collecteur (3), on injecte ou on coule la matière isolante (13) dans l'espace formé par le moule (10), la douille (2), le moule (12) et le collecteur (3), on remplace le moule (12) par la pièce métallique (14) positionnée autour de la douille (2) et en appui contre la matière isolante (13) en orientant les orifices (14d) entre les canaux (18), on positionne les moules (19 - 20) de chaque côté du rotor préformé, on introduit le fluide de transfert de calories dans le caloduc (C2) et l'on injecte ou l'on coule la matière isolante (15) d'enrobage des enroulements (5) et de finition du rotor.

9. Moyens de réalisation du rotor selon 1 et 6 et suivant le procédé selon 8, caractérisés en ce que le moule supérieur (12) présente du côté en regard de la douille (2) et du collecteur (3), des saillies angulaires (12a - 12b) reliées par des tenons radiaux (12c),qui constituent après enlèvement du moule (12), les volumes ou gorges extérieure (16) et intérieure (17) ainsi que les canaux (18) formant avec la pièce métallique (14) le caloduc (C2) de transfert des calories.

10. Procédé de réalisation du rotor selon 1, 5 et 6 dans lequel on remplit partiellement les caloduc (C1 - C2) d'un fluide d'échange thermique dont la température de vaporisation est fonction de la température maximum que le collecteur (3) doit atteindre, caractérisé en ce que l'on opère le remplissage partiel des caloducs, on porte la température des caloducs à une valeur à laquelle le fluide d'échange thermique se transforme (ébullition par exemple), ce qui chasse l'air contenu dans le circuit, et l'on obture le circuit lorsqu'il ne reste plus que du fluide en partie liquide et en partie gazeux.

FIG.1

FIG.2

FIG.3

FIG.4

FIG.5

FIG.8

FIG.10

FIG.6

FIG.9

FIG.7

Office européen
des brevets

**RAPPORT DE RECHERCHE EUROPEENNE**

EP 81 42 0070

| Catégorie | Citation du document avec indication, en cas de besoin, des parties pertinentes | Revendication concernée |
|---|---|---|
| | **DOCUMENTS CONSIDERES COMME PERTINENTS** | |
| A | <u>DE - A - 1 922 427</u> (BLUM)<br><br>* Page 3, lignes 18-25; page 4, ligne 15 - page 5, ligne 9 *<br><br>-- | |
| A | <u>US - A - 3 997 806</u> (HITACHI)<br><br>* Colonne 5, ligne 22 - colonne 6, ligne 14 *<br><br>-- | |
| A | <u>US - A - 4 137 472</u> (WORKMAN)<br><br>* Colonne 1, ligne 52 - colonne 2, ligne 44 *<br><br>---- | |

**CLASSEMENT DE LA DEMANDE (Int. Cl.³)**

H 02 K 9/22

**DOMAINES TECHNIQUES RECHERCHES (Int. Cl.³)**

H 02 K 9/20
9/22

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 18-06-1981 | TANGOCCI |

OEB Form 1503.1 06.78